Europäisches Patentamt

European Patent Office

Office européen des brevets

(11) Veröffentlichungsnummer: **0 226 702**
**A1**

## (12) EUROPÄISCHE PATENTANMELDUNG

(21) Anmeldenummer: 86109735.0

(22) Anmeldetag: 16.07.86

(51) Int. Cl.⁴: **F16F 1/38** , B60G 7/02 , F16C 27/06 , F16C 11/08 , B60B 9/10

(30) Priorität: 10.12.85 DE 3543566

(43) Veröffentlichungstag der Anmeldung: 01.07.87 Patentblatt 87/27

(84) Benannte Vertragsstaaten: BE DE FR GB IT NL SE

(71) Anmelder: **Boge GmbH** **Bogestrasse 50** **D-5208 Eitorf/Sieg(DE)**

(72) Erfinder: **Brenner, Heinz** **Am Thurmberg 11** **D-5483 Ahrweiler(DE)** Erfinder: **Gross, Josef** **Schillerstrasse 59** **D-5485 Sinzig/Bad Bodendorf(DE)**

(54) **Federelement.**

(57) Federelement zur elastischen lagerung von Achslenker und sonstigen Aggregaten in Kraftfahrzeugen, bestehend aus drei ineinander angeordneten Metallhülsen (1, 2, 3) und zwischen diesen eingebrachten elastomeren Federungskörper (4,5), die sich diametral gegenüberliegende nierenförmige Ausnehmungen (6) aufweisen. Es sollten große Verdrehwinkel bei kleinem Rückstellmoment, eine kardanisch weiche Federung wie auch eine Montage bei hängenden Rädern des Fahrzeuges gewährleistet sein. Hierzu ist die Außenfläche (7) der mittleren Metallhülse (2) kugelig ausgebildet und der zwischen der inneren und mittleren Metallhülse angeordnete Federungskörper (5) gegenüber einer Metallhülse auf seiner Außfläche mit Ausnehmungen (8) zur Aufnahme von Schmiermittel versehen.

Fig. 1

EP 0 226 702 A1

## Federelement

Die Erfindung bezieht sich auf ein Federelement zur elastischen Lagerung von Achslenker und sonstigen Aggregaten in Kraftfahrzeugen, bestehend aus drei ineinander angeordneten Metallhülsen und zwischen diesen eingebrachten elastomeren Federungskörpern mit diesen axial durchsetzenden, sich diametral gegenüberliegenden nierenförmigen Ausnehmungen.

Es sind Federelemente bekannt (z.B. GB-PS 660 560) bei denen drei ineinander angeordnete zylindrische Metallhülsen vorgesehen sind und deren elastomere Federkörper mit nierenförmigen Ausnehmungen durchsetzt sind. Durch die Verwendung von zylindrischen Rohren ist zur Erzielung einer hohen Federrate ein harter Gummi hotwendig, so daß in nachteiliger Weise nur eine geringe Geräuschdämpfung möglich ist. Aufgrund des Einsatzes eines harten Gummis weist ein solches Federelement eine hohe Verdrehsteifigkeit auf und ist bei kardanischen Bewegungen sehr hart. Außerdem können durch Fixierung aller elastomeren Körper an die entsprechende Metallhülse keine großen Verdrehwinkel ausgeführt werden. Da dieses Federelement so konstruiert ist, daß die einzelnen elastomeren Federkörper im Querschnitt gesehen eine sehr starke Höhe aufweisen, das bedeutet eine große Federhöhe, wird in axialer Richtung nur eine geringe Härte erzielt werden können.

Aus diesem Grunde sind axiale Anschläge zwingend notwendig. Nachteilig ist bei diesem Federelement, daß eine weiche Gummimischung zur Dämpfung von Geräuschen nicht eingesetzt werden kann, da dann die Eigenschaften in axialer Richtung sich weiter verschlechtern und eine entsprechend harte Federrate nicht mehr erreicht werden kann. Außerdem ist bei extremen Verdrehwinkeln keine Möglichkeit eines Durchrutschens gegeben, so daß bei solchen Belastungen mit der Zerstörung des Federelementes gerechnet werden muß.

Darüber hinaus sind elastische Kugelgelenke bekannt (z.B. DE-OS 24 10 032) bei denen der elastomere Federkörper ein Verstärkungselement aus Kunststoff aufweist. Dieses Kugelgelenk zeigt ebenfalls keine Durchrutschmöglichkeit, die bei extremen Verdrehwinkeln gewünscht ist. Außerdem besitzt dieses Gelenk eine geringe Verdrehweichheit und ist in allen radialen Belastungsrichtungen wie auch bei kardanischen Beanspruchungen sehr hart, da der elastomere Körper keine Ausnehmungen für eine bestimmte Belastungsrichtung aufweist.

Des weiteren sind elastische Drehgleitlager bekannt, (z.B. DE-OS 33 46 666) bei denen der elastomere Federkörper so ausgebildet ist, daß zwar eine axiale Beweglichkeit zum Ausgleich von Toleranzen vorgesehen ist, doch aufgrund der zylindrischen Metallhülsen und der dadurch bedingten großen Federhöhe der elastomeren Federkörper auch in radialer Belastungsrichtung sehr weich ist. Dadurch besitzt dieses Gleitlager keine hohen Federraten, wobei zusätzlich noch eine harte Gummimischung verwendet werden muß, da sonst das Schmiermittel in den dafür vorgesehenen Ausnehmungen entweichen kann. Falls eine entsprechende Federrate gewünscht wird, ist ein harter Gummi zu verwenden, so daß als Resultat eine schlechte Geräuschdämpfung auftritt. Eine weiche Gummimischung ist nicht anwendbar, da hierdurch die Federraten nicht mehr erreicht werden können und außerdem die Ausnehmungen zur Aufnahme des Schmiermittels nicht mehr an der zusätzlich angeordneten Gleitbüchse abdichtet.

Aufgabe der Erfindung ist es, ein Federelement so auszubilden, daß bei Beibehaltung einer harten Federrate in radial einer Richtung und im Winkel von 90 Grad dazu eine weiche Federrate, auch eine kardanisch weiche Dämpfung und große Verdrehwinkel des Innenteils bei kleinem Rückstellmoment erreicht werden können. Darüber hinaus soll eine komplette Montage auch bei hängenden Rädern während einer Fließbandmontge möglich sein.

Zur Lösung dieser Aufgabe ist erfindungsgemäß vorgesehen, daß die Außenfläche der mittleren Metallhülse kugelig ausgebildet ist und das der zwischen der inneren und mittleren Metallhülse angeordnete Federungskörper gegenüber einer Metallhülse auf seiner Außenfläche Ausnehmungen zur Aufnahme von Schmiermittel aufweist.

Vorteilhaft ist hierbei, daß durch die ballige Außenfläche der mittleren Metallhülse im Zentrum des Federelementes eine geringe Federhöhe erreicht wird, so daß die Verwendung eines weichen Gummis möglich ist, der nicht nur eine harte Federrate sondern auch eine sehr gute Geräuschdämpfung gewährleistet. Durch die Anordnung von mit Schmiermittel gefüllten Ausnehmungen ist ein Durchrutschen der inneren Metallhülse möglich, wobei durch die geringe Federhöhe und der damit verbundenen radial harten Federung das Schmiermittel in den Ausnehmungen verbleibt. Die Möglichkeit des Durchrutschens der inneren Metallhülse verhindert Beschädigungen des Federelementes bei extremen Verdrehwinkeln und gestattet außerdem eine Montage der Federelemente auch bei hängenden Rädern während einer Serienfertigung in der Kraftfahrzeugindustrie. Dabei kann das Federelement komplett montiert werden und stellt sich bei Aufsetzen des Fahrzeuges auf den Boden in seine Normallage zurück, ohne das bereits jetzt schon Beschädigungen vorhanden sind oder daß nach Einbringen des Federelementes ein Festziehen der Schrauben erst nach Aufsetzen des Fahrzeuges auf den Boden möglich ist.

Zur Erzielung einer kardanisch weichen Federung und im Winkel zueinander unterschiedlichen radialen Federungseigenschaften ist nach einem weiteren wesentlichen Merkmal vorgesehen, daß die nierenförmig Ausnehmung in axial Richtung auf der der Metallhülse zugewandten Seite eine der kugeligen Kontur der Metallhülse entsprechende Kontur aufweist.

In Ausgestaltung der Erfindung ist zwischen dem elastomeren Federkörper und der äußeren Metallhülse eine kraftschlüssige Verbindung durch Vulkanisation vorgesehen.

Eine in axialer und radialer Richtung harte Federungseigenschaft wird dadurch erzielt, daß die kraftschlüssige Verbindung mit einer zusätzlichen axialen und radialen Verspannung der äußeren Metallhülse versehen ist. Es wird dadurch vorteilhaft die freie Oberfläche des elastomeren Körpers auf ein Minimum begrenzt.

Zur Vermeidung von Geräuschen, die durch die axial bewegliche innere Metallhülse entstehen könnten ist der elastomere Federkörper an mindestens einer Stirnseite mit mindestens einem Anschlag versehen. Hierbei ist die axiale Baulänge der den Anschlag aufweisende Bauteile größer als die axiale Baulänge der inneren Metallhülse. Durch die Verspannung nach dem Einbau des Federelementes treten keinerlei Geräusche mehr auf.

Zur Erzielung von entsprechend gewünschten Federraten ist es nach einem weiteren wesentlichen Merkmal möglich, daß die elastomeren Federkörper verschiedene Gummihärten aufweisen.

Die Erfindung wird nachstehend an Hand von in der Zeichnung schematisch dargestellten Ausführungsbeispielen näher erläutert.

Es zeigt:

Figur 1 ein Federelement im Schnitt

Figur 2 das in Figur 1 dargestellte Federelement in Seitenansicht

Figur 3 eine weitere Ausführungsform eines Federelementes im Schnitt im Prinzip wie in Figur 1 bereits dargestellt.

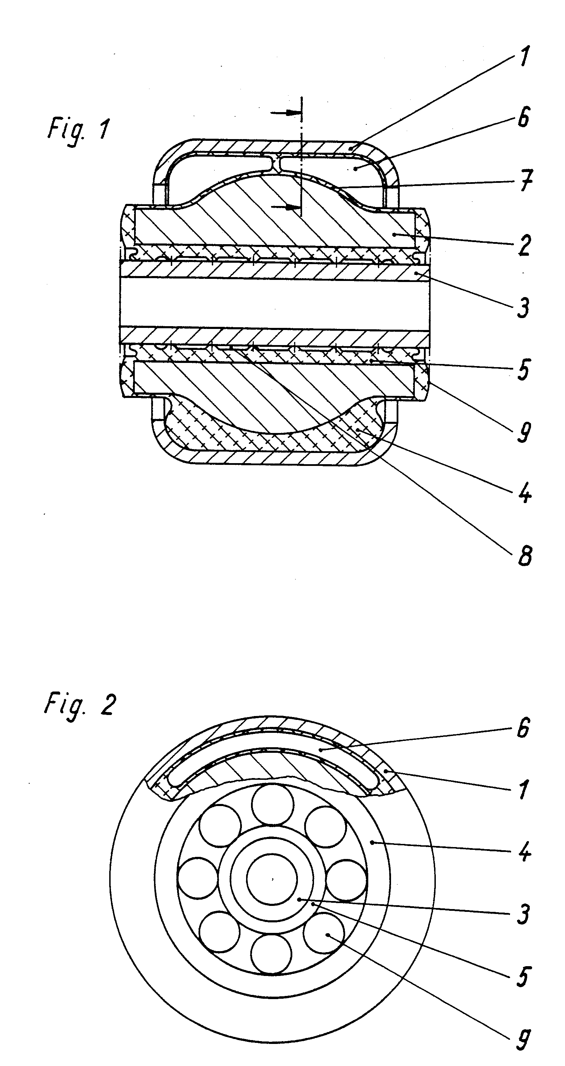

Das Federelement zur elastischen Lagerung nach der Figur 1 weist eine äußere Metallhülse 1, eine mittlere Metallhülse 2 und eine innere Metallhülse 3 auf. Zwischen den Metallhülsen sind elastomere Federkörper 4 und 5 angeordnet.

Der elastomere Federkörper 4 ist sowohl an der mittleren Metallhülse 2 wie auch an der äußeren Metallhülse 1 anvulkanisiert. Zusätzlich ist die äußere Metallhülse 1 an ihren Enden umgebördelt und im Durchmesser nach der Montage radial verkleinert, so daß der elastomere Federkörper 4 zu seiner Befestigung durch Vulkanisation noch axial und radial durch die Metallhülse 1 verspannt ist. Es wird dabei die freie Gummifläche auf ein Minimum verkleinert, so daß die Federrate in axialer und radialer Richtung erhöht ist. Darüber hinaus besitzt der elastomere Federkörper 4 über den Umfang verteilt angeordnete nierenförmige Ausnehmungen. Bei diesem Ausführungsbeispiel sind die nierenförmigen Ausnehmungen 6 diametral gegenüberliegend angeordnet, so daß in dieser Richtung das Federelement entsprechend weich gestaltet ist und im Winkel von 90 Grad dazu keine Ausnehmungen vorhanden sind, so daß in dieser Richtung eine entsprechend harte Federrate erzielt werden kann.

Der elastomere Federkörper 5 ist mit der mittleren Metallhülse 2 verbunden und weist auf seiner der inneren Metallhülse 3 zugewandten Außenfläche Ausnehmungen 8 auf, welche der Aufnahme von Schmiermittel dienen. Bei dem in Figur 1 dargestellten Ausführungsbeispiel ist der elastomere Federkörper 4 und der elastomere Federkörper 5 einteilig ausgebildet. Die mit Ausnehmungen 8 versehene Außenfläche des elastomeren Federkörpers 5 ist gegenüber der inneren Metallhülse 3 gleitend angeordnet, das heißt, daß bei großen Verdrehwinkeln nach Überwindung der Reibkräfte die Metallhülse 3 frei durchdrehen kann und daß nur ein geringes Rückstellmoment zu überwinden ist.

In axialer Richtung dienen die Anschläge 9 eines geräuscharmen Betriebes im Fahrzeug.

In Figur 2 ist in der Seitenansicht die äußere Metallhülse 1, der elastomere Federkörper 4, die innere Metallhülse 3, der elastomere Körper 5 und die Anschläge 9 gezeigt. Der Ausschnitt zeigt die nierenförmige Ausnehmung 6.

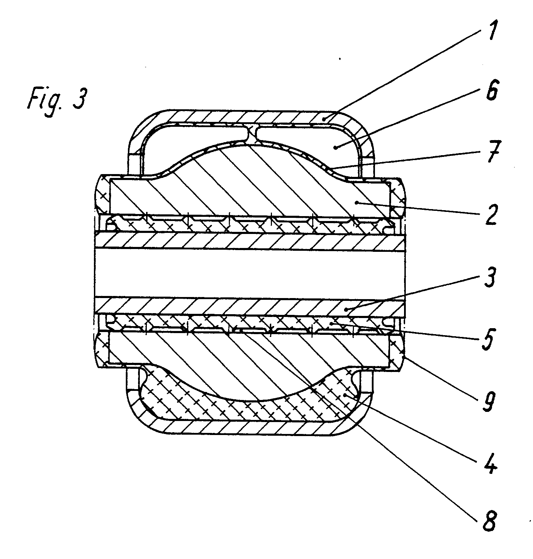

Die Figur 3 zeigt ein Federelement wie in Figur 1 im Prinzip bereits gezeigt mit dem Unterschied, daß der elastomere Federkörper 4 und der elastomere Federkörper 5 getrennte Bauteile sind. Dabei ist der elastomere Federkörper 4 mit der äußeren Metallhülse 1 und der mittleren Metallhülse 2 verbunden. Der elastomere Federkörper 5 dagegen ist mit der inneren Metallhülse 3 fest verbunden, wobei die Ausnehmungen 8 auf der äußeren Umfangsfläche angeordnet sind. Diese Ausnehmungen 8 sind wiederum mit Schmiermittel gefüllt und gewährleisten eine Gleitverbindung gegenüber der mittleren Metallhülse 2. Durch die Verwendung von zwei separaten elastomeren Federkörpern 4 und 5 ist die Verwendung von unterschiedlichen Gummiqualitäten mit unterschiedlicher Gummihärte möglich. Je nach Anwendungsfall lassen sich bestimmte Federungseigenschaften durch die gezielte Wahl der Gummihärte erreichen.

Bezugszeichenliste

1 -Metallhülse
2 -Metallhülse
3 -Metallhülse
4 -elastomerer Federkörper
5 -elastomerer Federkörper
6 -nierenförmige Ausnehmung
7 -Außenfläche der Metallhülse 2
8 -Ausnehmungen
9 -Anschlag

**Ansprüche**

1. Federelement zur elastischen Lagerung von Achslenker und sonstigen Aggregaten in Kraftfahrzeugen, bestehend aus drei ineinander angeordneten Metallhülsen und zwischen diesen eingebrachten elastomeren Federungskörpern, mit diesen axial durchsetzenden, sich diametral gegenüberliegenden nierenförmigen Ausnehmungen, dadurch gekennzeichnet, daß die Außenfläche (7) der mittleren Metallhülse - (2) kugelig ausgebildet ist und daß der zwischen der inneren (1) und der mittleren Metallhülse (2) angeordnete Federungskörper (5) gegenüber einer Metallhülse (2 oder 3) auf seiner Außenfläche Ausnehmungen (8) zur Aufnahme von Schmiermittel aufweist.

2. Federelement nach Anspruch 1, dadurch gekennzeichnet, daß die nierenförmige Ausnehmung (6) in Axialrichtung auf der der Metallhülse (2) zugewandten Seite eine der kugeligen Kontur der Metallhülse (2) entsprechende Kontur aufweist.

3. Federelement nach Anspruch 1, dadurch gekennzeichnet, daß zwischen dem elastomeren Federkörper (4) und der äußeren Metallhülse (1) eine kraftschlüssige Verbindung durch Vulkanisation vorgesehen ist.

4. Federelement nach Anspruch 3, dadurch gekennzeichnet, daß die kraftschlüssige Verbindung mit einer zusätzlichen, axialen und radialen Verspannung der äußeren Metallhülse (1) versehen ist.

5. Federelement nach Anspruch 1, dadurch gekennzeichnet, daß der elastomere Federkörper (4) an mindestens einer Stirnseite mit mindestens einem Anschlag - (9) versehen ist.

6. Federelement nach Anspruch 1, dadurch gekennzeichnet, daß die elastomeren Federkörper (4 und 5) verschiedene Gummihärten aufweisen.

Fig. 1

Fig. 2

Fig. 3

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| | **EINSCHLÄGIGE DOKUMENTE** | | EP 86109735.0 |
| A | DE - A1 - 2 804 006 (CAOUTCHOUC MANUFACTURE ET PLASTIQUES KLEBER-COLOMBES)  * Fig. 6; Seite 6, 2. Absatz *  -- | 1 | F 16 F 1/38  B 60 G 7/02  F 16 C 27/06  F 16 C 11/08  B 60 B 9/10 |
| A | DE - A1 - 3 131 036 (WOCO FRANZ-JOSEF WOLF & CO)  * Fig. 1, Bezugszeichen 16 *  -- | 1 | |
| A | DE - A1 - 2 916 186 (SOCIETA' APPLICAZIONI GAMMA ANTIVIBRANTI S.P.A.)  * Gesamt *  -- | 1 | |
| A | DE - A1 - 3 346 665 (LEMFÖRDER METALLWAREN AG)  * Fig. 1-4 *  ---- | 1 | RECHERCHIERTE SACHGEBIETE (Int Cl 4)  F 16 F 1/00  B 60 G 7/00  F 16 C 11/00  F 16 C 27/00  B 60 B 17/00  B 60 B 9/00 |

Der vorliegende Recherchenbericht wurde für alle Patentansprüche erstellt.

| Recherchenort | Abschlußdatum der Recherche | Prüfer |
|---|---|---|
| WIEN | 23-03-1987 | PIRKER |